# NEW EUROPEAN PATENT SPECIFICATION

(11) **EP 0 659 159 B2**
(45) Date of publication and mention of the opposition decision: **21.03.2001**
(45) Mention of the grant of the patent: 17.07.1996
(21) Application number: 93922668.4
(22) Date of filing: 17.09.1993
(51) Int. Cl.: B65F 1/12, B65F 3/22, B65F 5/00, B65F 1/06, B65F 1/10, B65F 1/14

(54) **DEVICE FOR COLLECTING REFUSE**
VORRICHTUNG ZUM SAMMELN VON MÜLL
DISPOSITIF DE COLLECTE DE DECHETS

(30) Priority: 17.09.1992 NL 9201615; 04.11.1992 NL 9201922
(43) Date of publication of application: 28.06.1995
(60) Divisional application: 95203135.9
(73) Proprietor: Metro Waste Systems B.V., 1019 PL AMSTERDAM (NL)
(72) Inventor: RUTTE, Antonius, NL-2132 TB Hoofddorp (NL)
(74) Representative: Metman, Karel Johannes
(86) International application number: NL9300189
(87) International publication number: WO9406707

(56) References cited:
- EP-A- 0 240 748
- EP-A- 0 408 820
- EP-A- 0 432 306
- EP-A- 0 480 326
- EP-A- 0 490 456
- DE-A- 3 727 431
- DE-B- 1 097 355
- DE-C- 69 232
- DE-U- 9 004 988
- DE-U- 9 100 695
- FR-A- 2 617 813
- US-A- 1 333 051
- US-A- 3 485 408
- US-A- 3 677 422
- US-A- 3 858 927
- US-A- 4 715 498
- Safety requirements for immobile material hoists, NEDERLANDS NORMALISATIE-INSTITUUT,NEN 3585, 1e druk, maart 1990

## Description

The present invention relates to a device for collecting refuse, such as glass, paper, coarse refuse and the like, according to the preamble of claim 1.

In current devices for collecting refuse, one or more containers for different separated types of refuse are arranged on the sidewalk or, for example, on parking places, which is a "visual pollution" of the street image and occupies a lot of space. Furthermore, it is often difficult to fill the containers since the insert opening is arranged relatively high.

A device for collecting refuse according to the preamble of claim 1 is described as prior art in DE-U-90 04 988 (page 2, last paragraph - page 4, first paragraph).

The object of the present invention is to provide an improved device for collecting refuse.

The device according to the invention is characterized by the features of the characterizing part of claim 1.

According to the invention, the hole in the ground caused by the empty outer casing is protected thereby preventing people from falling into it.

The invention will hereafter be elucidated with reference to the drawing very schematically showing two embodiments of devices for collecting refuse, where the casing is only partially underground and the safety means are not shown, contrary to the claims.

Fig. 1 is a vertical longitudinal section of a first embodiment of a device for collecting refuse.

Fig. 2 shows a modification of the embodiment of the device of Fig. 1, which is particularly intended for moisture containing refuse.

The drawings show devices for collecting refuse, in particular separated household and industrial refuse, such as glass, paper, chemical waste, GFG, textile and other refuse which is removed separately, said devices being arranged mainly along side public roads, in particular in dwelling environments.

The refuse collecting device as shown comprises an outer casing 1 which, in this case, is arranged partially underground and is intended to substantially receive a refuse container 2 therein. The outer casing 1 is made of steel and is anchored in the soil with an enlarged base plate 3. The outer casing 1 in this case has a circular cross section and a longitudinal shape but may also assume other shapes depending on the use. The refuse container 2 which is also cylindrical is submerged for the greater part in the outer casing 1 and has a cylindrical side wall 4, a bottom wall serving as lid 5 for opening and closing a discharge opening, and a top wall 6. A lug 7 is welded on the top wall 6 to enable a loading crane to pull the refuse container 2 out of the outer casing 1 in order to empty it. The lid is pivotally connected to the lower side of the side wall 4 by means of a pivot 8 and diametrically opposite the pivot 8 there is arranged a bolt 9 which can easily be opened. By means of said lid 5, a refuse container 2, which is hoisted out of the outer casing 1, may be emptied above the loading space of a truck by opening the lid 5.

For placing the refuse container 2 concentrically in the outer casing 1, there are arranged at least three circumferentially spaced centering cams 10 on the inner side of the side wall 4 of the outer casing 1, said cams having inclined upper sides guiding the refuse container 2 to a centered position. Then a horizontal flange 11 of the refuse container 2, which extends circumferentially near the top wall 6, rests on the upper edge of the outer casing 1 with interposition of a seal 12. A vertical circumferential edge 13 on the flange 11 causes a further protection of the seal 12 so that moisture and dirt are prevented from penetrating between the outer casing 1 and the refuse container 2. In, or in this case near the top wall 6 and in the side wall 4 there are arranged one or more insert openings 14 the shape and size of which depend on the type of refuse for which the refuse container is intended. For glass the insert opening 14 will be more or less round, while the insert opening for paper will assume more the shape of a slot.

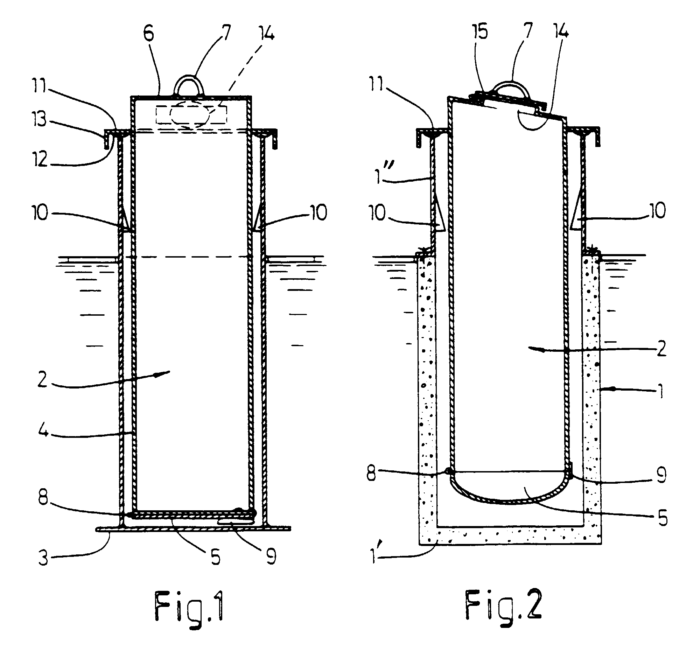

Fig. 2 shows a further embodiment of the device for collecting refuse, which is suited for garbage sacks or coarse refuse, for example. For this purpose, a large insert opening 14 is provided in the top wall 6 of the refuse container 2, said opening being closable by a lid 15. The lid 5 at the lower side of the refuse container 2 for emptying purpose is in this case bowl-shaped so that the division between lid 5 and the remainder of the refuse container 2 is at a distance above the bottom of the container and no danger arises that liquid which is collected on the bottom of the refuse container 2 leaks away beyond the seal of the lid 5.

In this embodiment, the outer casing 1 is made partly of concrete and partly of steel, in which the underground portion 1' is formed from concrete on which an overground portion 1" is attached. It is noted that such an outer casing 1 may also be used in the first embodiment. The same applies for the full concrete embodiment of the outer casing 1. The outer casing 1 and possibly also the refuse container 2 may also be made of plastic.

According to the invention, but not shown in the drawing, it is conceived to make the overground cross section of the refuse container 2 smaller than the underground one permitting very large refuse containers 2 without affecting the overground part thereof. In this case the casing will extend only underground. Generally, it will be pursued to maintain a comfortable height of the insert opening 14 of for example 80 to 90 cm in order to allow an ergonomically favourable insertion of refuse. According to the invention where the outer casing extends only underground, it is proposed for safety purposes, when the refuse container 2 is removed from the outer casing 1, to rise a fence or inner casing automatically, for example by means of a spring device or by counter-weights, thereby preventing people passing by to fall into the outer casing 1.

## Claims

1. Device for collecting refuses, such as glass, paper, coarse refuse and the like, comprising an outer casing (1) to be built into the ground such that the casing will extend only underground, and a rigid refuse container (2) adapted to be placed in the outer casing (1) and having a hoist engagement means to be lifted therefrom in order to be emptied, the refuse container (2) having an insert opening (14) in or near the upper wall and a discharge opening in its bottom part closable by a closure means (5), the refuse container (2) having an overground part and an underground part and the cross section of the overground part being smaller than that of the underground part, **characterized** in that there are provided safety means including a fence or inner casing rising automatically through raising means when the refuse container is hoisted from the outer casing to prevent people passing by to fall into the outer casing (1), wherein the raising means includes a spring device or counter weights.

2. Device according to claim 1, wherein the closure means (5) of the discharge opening is a lid means.

3. Device according to claim 2, wherein the lid means (5) is connected to the overlying part of the refuse container (2) by a pivot (8).

4. Device according to claim 2 or 3 wherein the lid means (5) is bowl-shaped such that a division between said lid means and the overlying part of the refuse container (2) is at a distance above the bottom of the container (2) formed by said lid means.

## Patentansprüche

1. Vorrichtung zum Sammeln von Müll wie Glas, Papier, groben Müll oder ähnlichem, die einen Außenschacht (1), welcher in den Erdboden derart einzubetten ist, daß sich der Schacht nur unterirdisch erstreckt, und einen steifen in dem Außenschacht (1) plazierbaren Müllbehälter (2) aufweist, welcher ein Hebevorrichtungs-Angreifmittel aufweist, um den Müllbehälter zum Entleeren aus dem Außenschacht herauszuziehen, wobei der Müllbehälter (2) eine Einführöffnung (14) in oder nahe der oberen Wand und eine mit einem Schließmittel (5) verschließbare Entladeöffnung in seinem unteren Teil aufweist, wobei der Müllbehälter (2) einen Abschnitt oberhalb des Erdbodens und einen Abschnitt im Erdboden aufweist und der Querschnitt des oberhalb des Erdbodens gelegenen Abschnitts kleiner als der des im Erdboden befindlichen Abschnitts ist, dadurch gekennzeichnet, daß Sicherheitsmittel vorgesehen sind, die ein Gitter oder ein Innengehäuse aufweisen und automatisch mittels Anhebemitteln angehoben werden, wenn der Müllbehälter aus dem Außenschacht herausgezogen wird, um zu verhindern, daß Passanten in den Außenschacht (1) hineinfallen, wobei die Anhebemittel eine Federvorrichtung oder Gegengewichte aufweisen.

2. Vorrichtung nach Anspruch 1, wobei das Schließmittel (5) der Entladeöffnung einen Deckel aufweist.

3. Vorrichtung nach Anspruch 2, wobei der Deckel (5) mittels eines Gelenkes (8) mit dem zu überlagernden Abschnitt des Müllbehälters (2) verbunden ist.

4. Vorrichtung nach Anspruch 2 oder 3, wobei der Deckel (5) schalenförmig ist, so daß ein Trennabschnitt zwischen dem Deckel und dem zu überlagernden Abschnitt des Müllbehälters (2) in einem Abstand über dem von dem Deckel gebildeten Boden des Behälters (2) angeordnet ist.

## Revendications

1. Dispositif destiné à recueillir des déchets, tels que du verre, du papier, de gros déchets et analogues, comprenant une enveloppe extérieure (1) devant être incorporée dans le sol, de sorte que l'enveloppe ne s'étende qu'au-dessous du sol, et un conteneur rigide à déchets (2) conçu pour être placé dans l'enveloppe extérieure (1) et comportant un moyen de prise pour hissage pour être soulevé hors de celle-ci de manière à être vidé, le conteneur à déchets (2) présentant une ouverture d'insertion (14) dans paroi supérieure ou à proximité de celle-ci et une ouverture de déchargement dans sa partie inférieure obturable par un moyen de fermeture (5), le conteneur à déchets (2) présentant une partie au-dessus du sol et une partie au-dessous du sol et la section transversale de la partie au-dessus du sol étant plus petite que celle de la partie au-dessous du sol, **caractérisé** en ce qu'il est prévu un moyen de sécurité comprenant une barrière ou une enveloppe intérieure s'élevant automatiquement par l'intermédiaire d'un moyen de hissage lorsque le conteneur à déchets est hissé hors de l'enveloppe extérieure afin d'empêcher des passants de tomber à l'intérieur de l'enveloppe extérieure (1), dans lequel le moyen de hissage comprend un dispositif formant ressort ou des contrepoids.

2. Dispositif selon la revendication 1, dans lequel le moyen de fermeture (5) de l'ouverture de déchargement est un moyen formant couvercle.

3. Dispositif selon la revendication 2, dans lequel le moyen formant couvercle (5) est relié à la partie sus-jacente du conteneur à déchets (2) par un pivot (8).

4. Dispositif selon la revendication 2 ou 3, dans lequel le moyen formant couvercle (5) est en forme de coupe de telle façon qu'une séparation entre ledit moyen formant couvercle et la partie sus-jacente du conteneur à déchets (2) se trouve à une certaine distance au-dessus du fond du conteneur (2) constitué par ledit moyen formant couvercle.
